# EUROPEAN PATENT APPLICATION

(11) **EP 2 669 544 A1**
(43) Date of publication of application: **04.12.2013**
(21) Application number: 12198098.1
(22) Date of filing: 19.12.2012
(51) Int. Cl.: F16F 9/58

(54) **Damping bumper for motor-vehicle suspensions**

(30) Priority: 31.05.2012 IT TO20120473
(71) Applicant: Insit Industria S.p.A., 10129 Torino (IT)
(72) Inventor: Pejrani, Giorgio, I-10129 Torino (IT); Aloi, Piergiuseppe, I-10129 Torino (IT)
(74) Representative: Buzzi, Franco

(57) **Abstract**

A damping bumper for suspensions of motor vehicles, which is formed by a tubular body (1) made of thermoplastic elastomeric material having a general bellows shape and having a cylindrical top shank (3) configured for being anchored to the annular thrust bearing of the suspension and provided with communication passages (8, 9, 10) between the inside of the tubular body (1) and the atmosphere.

## Description

### Field of the invention

The present invention relates to a damping bumper for motor-vehicle suspensions that have a telescopic shock absorber with associated annular top thrust bearing, against which a helical spring reacts.

Damping bumpers of this sort perform, in use, the function of absorbing the energy of impact in the condition of complete compression of the shock absorber, dissipating said energy and thus preserving the structural integrity of the shock absorber and of the parts of the vehicle to which it is connected.

### Prior art

Traditionally, these damping bumpers, referred to conventionally as "jounce bumpers", are constituted by a thick-walled elastic hollow body, typically made of foamed polyurethane, directly fitted on the stem of the shock absorber resting against the corresponding thrust bearing.

This solution, described for example in the U.S. patent No. US-4681304, entails various drawbacks: in particular, a limited resistance to fatigue and consequently a relatively modest working life.

In an attempt to solve these problems, more recently damping bumpers have been proposed made of thermoplastic elastomeric material, formed by a tubular body having a general bellows shape with a relatively thin wall. These damping bumpers, examples of which are described in the international patent applications Nos. WO-2012/021612 and WO-2012/021619 filed in the name of Du Pont de Nemours, are produced using particular techniques of injection blow moulding. This technique, and the equipment for its implementation, are described and illustrated, for example, in the U.S. patent application No. US-2007/0245791 filed in the name of Ossberger GmbH.

The results that can be obtained with these damping bumpers in terms of fatigue strength and working life are appreciably improved: they present, however, the technical problem connected to their installation, taking into account the fact that the internal diameter of the corrugations of the thin-walled tubular body is greater than that of the stem of the shock absorber. It is thus necessary to envisage a system of attachment of the damping bumper to the thrust bearing of the suspension, instead of directly to the shock absorber as in the case of the conventional damping bumpers referred to previously. To this is to be added the further technical problem regarding the need to enable evacuation of the air that during operation, when the damping bumper is deformed by the cylinder of the shock absorber when the latter is in contact with the base of the damping bumper stopping it up, it is compressed inside it. The evacuation of the compressed air must moreover take place without generating any whistling or unacceptable noises.

### Summary of the invention

With a view to achieving the above purposes, the subject of the invention is a damping bumper of the type defined above, the primary characteristic of which lies in that the tubular bellows-like body is formed with a cylindrical top shank configured for being anchored to the annular thrust bearing of the suspension and provided with communication passages between the inside of the bellows-like body and the atmosphere.

According to a preferred embodiment of the invention, the aforesaid top shank of the tubular bellows-like body has at the top a ring of teeth projecting radially outwards and interspersed with intermediate axial grooves that extend throughout the length of the shank and communicate at the bottom with a peripheral manifold formed at the base of the shank and in turn in communication with a series of channels that extend from the base of the shank outwards.

### Brief description of the drawings

The invention will now be described in detail with reference to the annexed drawings, which are provided purely by way of non-limiting example and in which:

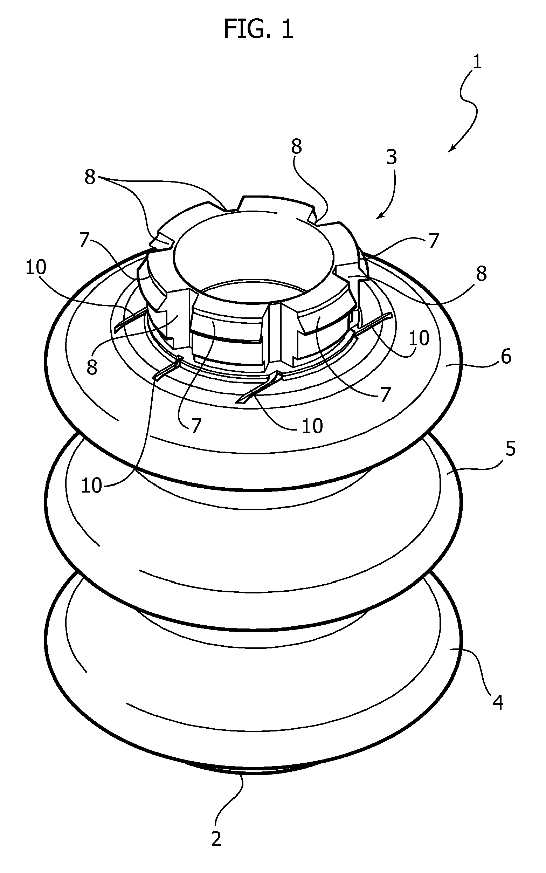

- Figure 1 is a schematic perspective view of a damping bumper according to the invention;

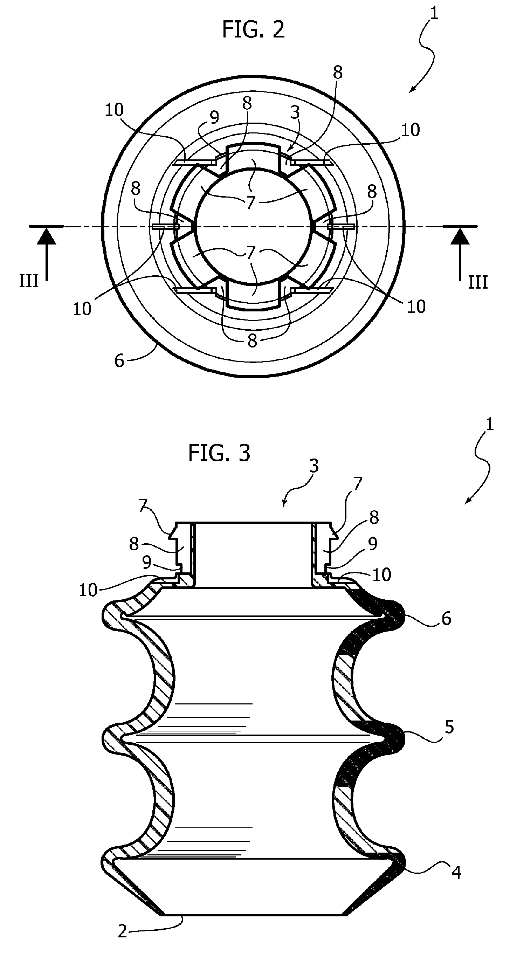

- Figure 2 is a top plan view of the damping bumper of Figure 1; and
- Figure 3 is a vertical cross-sectional view according to the line III-III of Figure 2.

### Detailed description of the invention

With reference to the drawings, designated as a whole by 1 is a damping bumper for suspensions of motor vehicles constituted by a tubular bellows-like body. The modalities of installation and operation of the damping bumper 1 are generally known and will not be described in detail for reasons of brevity: for the purposes of the present invention, it is sufficient to clarify that it is positioned coaxially with respect to the top part of the stem of a telescopic shock absorber, with its base, designated by 2, facing the cylinder of the shock absorber, and its top, designated as a whole by 3, anchored in the way clarified in what follows to the thrust bearing of the suspension against which the helical spring of the suspension reacts.

Between the base 2 and the top 3, the tubular body 1 has a corrugated configuration, in the case of the example illustrated with three identical corrugations 4, 5 and 6.

The entire damping bumper is formed by a single piece of a thermoplastic elastomeric material, for example of the type referred to as Hytrel^{®}, produced by Du Pont De Nemours, and is obtained with a method that is generally known (for example, from the already cited U.S. patent application No. US-2007/0245791), which envisages a step of injection or injection-compression of the thermoplastic material, followed by a step of extrusion of the injected material to form a tubular parison, and then a final step of blow moulding within a die constituted by a pair of half-dies that can be opened and closed. This makes it possible to obtain the wall of the tubular body 1 with variable thicknesses that are relatively small and the top 3 with localized greater thicknesses and with the peculiar conformation according to the invention that will be described hereinafter.

The top 3 of the tubular body 1 consists of a cylindrical shank configured so as to be anchored firmly to the annular thrust bearing against which, as has been said, the top end of the helical spring of the suspension reacts.

Said top shank 3 has at the top a circumferential ring of teeth 7 projecting radially outwards and interspersed with intermediate axial grooves 8 that extend throughout the length or height of the top shank 3 and communicate at the bottom with a peripheral manifold 9 formed at the base of the top shank 3. The peripheral manifold 9 is in turn in communication with a series of channels 10 that extend from the base of the shank outwards and are formed by impressions or grooves made on the top surface of the corrugation 6.

Via the radial teeth 7, the top shank 3 and hence the entire tubular body 1 of the damping bumper are engaged and anchored to the internal edge of the annular thrust bearing of the suspension: engagement is obtained simply by means of axial introduction of the top shank 3 through the thrust bearing, and its radial contraction is rendered possible by the elasticity of the teeth 7, which, at the end of the passage, return into their undeformed starting condition, thus engaging to the thrust bearing.

The function of the intermediate axial grooves 8, of the manifold 9, and of the channels 10 is that of enabling in operation the air contained within the tubular body 1, and compressed following upon its elastic axial deformation caused by the contraction of the shock absorber, to be vented outside without this generating any whistling or in any case troublesome noises.

In the case of the example illustrated, the channels 10 are parallel to one another: different arrangements, for example radial ones, may, however, be devised.

Of course, the details of construction and the embodiments may vary widely with respect to what has been described and illustrated herein, without thereby departing from the scope of the present invention as defined in the ensuing claims.

## Claims

1. A damping bumper for motor-vehicle suspensions that have a telescopic shock absorber and associated annular top thrust bearing against which a helical spring reacts, said damping bumper being constituted by a tubular body (1) made of thermoplastic elastomeric material having a general bellows shape, **characterized in that** said tubular body (1) has a cylindrical top shank (3) configured for being anchored to the annular thrust bearing of the suspension and provided with communication passages (8, 9, 10) between the inside of the tubular body (1) and the atmosphere.

2. The damping bumper according to Claim 1, **characterized in that** said top shank (3) has at the top a ring of teeth (7) projecting radially outwards and interspersed with intermediate axial grooves (8) that extend throughout the length of said top shank (3) and communicate at the bottom with a peripheral manifold (9) formed at the base of the top shank (3) and in turn in communication with a series of channels (10) that extend from the base of the top shank (3) outwards.

3. The damping bumper according to Claim 2, **characterized in that** said channels (10) are parallel to one another.

4. The damping bumper according to one or more of the preceding claims, **characterized in that** it is formed by an injection-extrusion-blow moulding process.
